Europäisches Patentamt

European Patent Office

Office européen des brevets

(19)

(11) Publication number: **0 132 882**
**B1**

(12) **EUROPEAN PATENT SPECIFICATION**

(45) Date of publication of patent specification: 08.04.87

(21) Application number: 84201036.5

(22) Date of filing: 12.07.84

(51) Int. Cl.⁴: **G 01 F 11/02, A 47 K 5/12,
B 65 D 47/34**

(54) **Dispensing and dosing pump.**

(30) Priority: 14.07.83 NL 8302517

(43) Date of publication of application:
13.02.85 Bulletin 85/07

(45) Publication of the grant of the patent:
08.04.87 Bulletin 87/15

(84) Designated Contracting States:
AT BE CH DE FR GB IT LI NL SE

(56) References cited:
BE-A- 528 894
FR-A-1 219 664
GB-A-1 117 965
NL-A-7 802 665
US-A-2 706 950
US-A-3 759 426

(73) Proprietor: **UNILEVER NV**
**Burgemeester s'Jacobplein 1 P.O. Box 760**
**NL-3000 DK Rotterdam (NL)**
(84) **BE CH DE FR IT LI NL**

(73) Proprietor: **UNILEVER PLC**
**Unilever House Blackfriars P.O. Box 68**
**London EC4P 4BQ (GB)**
(84) **GB**

(72) Inventor: **van Duijn, Jan**
**Julianasingel 7c**
**NL-3134 VM Vlaardingen (NL)**
Inventor: **Poel, Sebo**
**Geraniumstraat 44**
**NL-3135 XG Vlaardingen (NL)**
Inventor: **Blom, Jan**
**Zocherstraat 27**
**NL-3961 CK Wijk bij Duurstede (NL)**

(74) Representative: **Mole, Peter Geoffrey et al**
**UNILEVER PLC Patent Division P.O. Box 68**
**Unilever House Blackfriars**
**London EC4P 4BQ (GB)**

Courier Press, Leamington Spa, England.

## Description

The invention relates to a dispensing and dosing pump, and in particular to such pump comprising a cylinder with a top and a bottom wall, having an inlet in or near the bottom wall, an outlet in or near the top wall, and a piston which is up- and downwardly movable within the cylinder by means of a piston rod extending through the top-wall of the cylinder, the dispensing action of the pump taking place on the up-stroke of the piston.

Such a pump is already known from French patent specification 1 219 664, in which a pump is described which is suitable for dispensing and dosing oil, in which check valves are incorporated in the piston part and the bottom wall of the cylinder.

Generally, such pumps are used for dispensing doses of thin liquid or viscous products, such as liquid soaps, detergents, creams and similar products.

In particular in the case of detergents for dishwashing and fabric-washing machines in small laundries, hotels and hospitals, as well as in the case of carpet-cleaning or waxy products for floor cleaning and treating machines, it is desirable that the detergent-active product can be dosed in a simple manner, i.e. can be delivered from a reservoir to the washing bath or the cleaning solution, without any leaking or spilling or contact with the human body. Moreover, it is often necessary that the dosing can be varied, since at the beginning of the first washing cycle a much larger amount of detergent is necessary than during the subsequent washing cycles in the washing process. Thus, the object of the present invention is to provide a dispensing and dosing pump which can be manufactured from simple metal and plastic components and which can be easily mounted to reservoirs or containers from which the product has to be pumped or dosed, thereby providing the possibility of dosing the product in the amount as desired.

Accordingly, the invention provides a dispensing and dosing pump comprising a cylinder with a top and a bottom wall having an inlet in or near the bottom wall and an outlet in or near the top wall, and a piston which is up- and downwardly movable within the cylinder by means of a piston rod extending through the top wall of the cylinder, the dispensing action of the pump taking place on the up-stroke of the piston, characterized in that a first membrane is fitted to the piston which, on the up-stroke of the piston, is pressed into sliding and sealing contact with the inside wall of the cylinder while on the down-stroke allowing open passage, and a second stationary membrane is fitted to or near the top wall of the cylinder, which, on the down-stroke of the piston, is pressed into sliding and sealing contact with the piston rod while, on the up-stroke allowing open passage.

Moreover, usually a pressure spring is incorporated between the bottom wall of the cylinder and the piston which spring, after a downstroke of the piston part, causes the piston to return to the upwardly pressed position of rest.

The invention will now be further illustrated with reference to the preferred embodiments show in the accompanying drawing, in which:

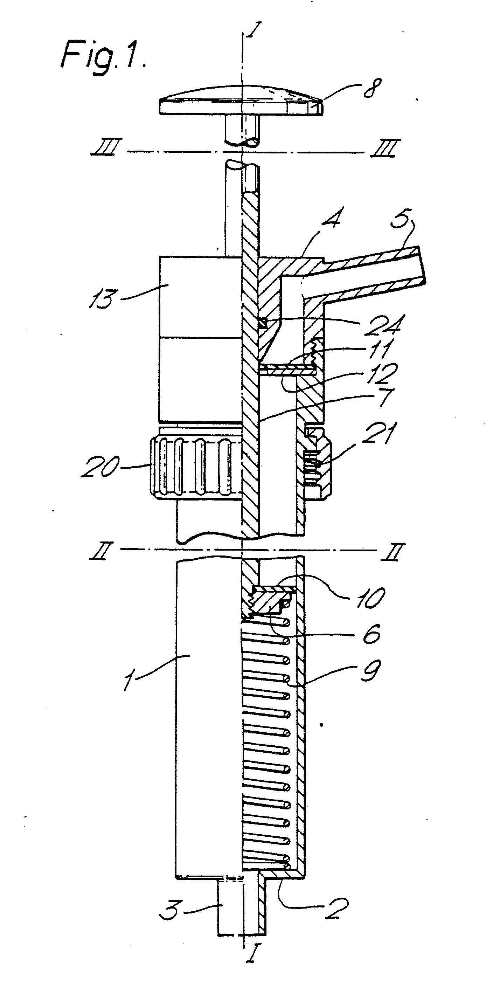

Fig. 1 is a side view of a pump according to the present invention with the piston in partly depressed position, the outside of the pump being shown to the left of the line I—I and the inside being shown in longitudinal cross section to the right of the line I—I, and

Fig. 2 shows a second preferred embodiment of a pump according to the present invention, which is illustrated in the same manner as in Fig. 1.

Fig. 3 shows a third preferred embodiment of a pump according to the present invention which is illustrated, partly cut away, in the same manner as in Fig. 1.

In the Figures the pump is drawn broken off at the level of the lines II—II and III—III so that the clarity of the drawing is not diminished due to correct dimensioning.

The dispensing and dosing pump comprises a cylinder having a bottom wall 2 provided with an inlet 3, a top wall 4 and an outlet 5. A piston 6 can be moved up and down in the cylinder by means of a piston rod 7, which extends leak-tight through top wall 4 and ends in a knob 8, with which the user can carry out the operating movement. Usually a pressure spring 9 (drawn in cross section) is incorporated which, during non-operation, keeps the piston in an upwardly pressed position or, after depression, causes the piston to return to the upward position of rest.

On piston 6 a first annular membrane 10 is mounted which, on the downstroke, can deform to a slight degree thus allowing along its outside an open passage between the cylinder spaces below and above the piston. On the upstroke, membrane 10 is pressed into sliding and sealing contact with the inside wall of the cylinder.

On or near the top wall of the cylinder a second, stationary membrane 11 is mounted, which rests on a non-flexible ring 12. The outer edges of ring 12 and membrane 11 are rigidly clamped between the wall of the cylinder and top part 13 which is screwed onto the cylinder. On the upstroke of the piston, membrane 11 can deform to a slight degree, as a result of which on the inside of membrane 11 and the outside of piston rod 7 an open passage is established between the cylinder chamber and outlet 5. On the downstroke, the inside of membrane 11 is pressed into sliding and sealing contact with the wall of piston rod 7.

The combined action of membranes 10 and 11 during upward and downward movement of the piston brings about the pumping action. On the downstroke of the piston, during which membrane 11 is closed and membrane 10 open, an under-pressure arises in the space between the membrane, as a result of which the liquid under the piston is sucked along membrane 10 into the space above the piston. On the up-stroke, during which membrane 10 is closed and membrane 11 open, new liquid is drawn through inlet 3 into the space under the piston, while the liquid above the piston is pumped along membrane 11 through outlet 5. Since the pump is based on the principle of positive displacement, the amount of liquid pumped is directly proportional to the length of the piston stroke the user being offered the possibility of accurately dosing the desired amount of liquid in a simple manner by allowing the piston to make a full or partial stroke as desired.

Moreover, the pumping action described above has the result that the pump according to the present invention is self-priming and thus at first application can be started up in a simple manner by allowing the piston to make one or several strokes until the air in the cylinder space has been replaced by the liquid to be pumped.

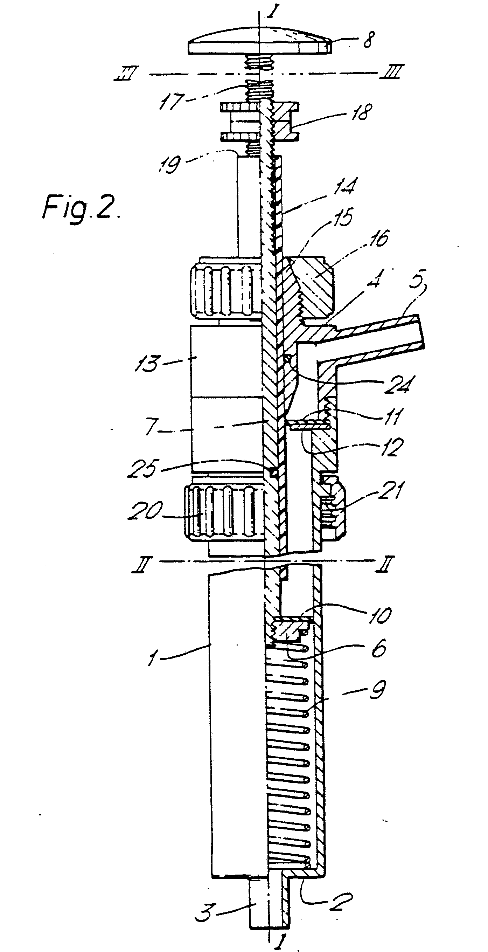

In Fig. 2 a preferred embodiment of the pump is illustrated in which means are incorporated with which partial and repeated dosing of a particular partial volume (corresponding with a particular restricted piston stroke) are simplified for the user. To that purpose, such means comprise a blocking which restricts in a reproducible way the stroke of the piston. In a preferred embodiment, such stroke-restricting means comprise a sleeve 14, which encloses piston rod 7 and extends through the top wall of the cylinder. Sleeve 14 is slidably mounted and leak-tight, both with respect to piston rod 7 and with respect to top wall 4. In top wall 4 a clamping bush 15 with a screw cap 16 is incorporated for securing sleeve 14 with respect to the cylinder.

If not secured, sleeve 14 has no influence on the action of the pump and the user can cause the piston to make a full or partial stroke at will, during which the sleeve will move together with the piston rod.

If, on the other hand, the sleeve is secured with respect to the cylinder, the stroke which the piston can perform is restricted to the distance between the upper side 19 of sleeve 14 and the lower side of knob 8. In this way, by securing sleeve 14 in a particular position, the user establishes exact and easily repeated dosing.

In order to prevent leakage between the parts which are slidably mounted with respect to each other, conventional means, such as for instance O-rings 24, 25, will be incorporated.

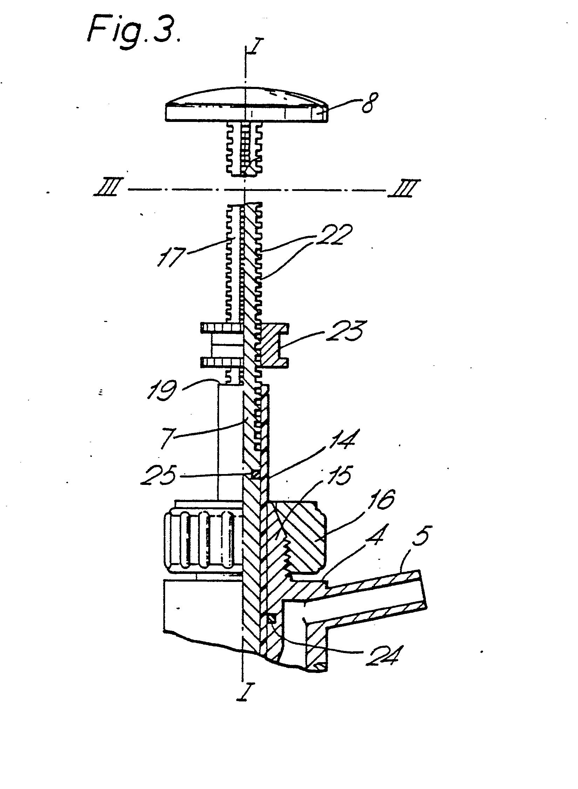

In addition to or instead of sleeve 14 other means for restricting the stroke of the piston may be incorporated. In a preferred embodiment the upper portion 17 of the piston rod is screw-threaded carrying a blocking nut 18 allowing fine adjustment of the stroke length over the threadened portion. In another preferred embodiment (Fig. 3) the upper portion 17 is cross-shaped and provided with nicks 22 carrying a blocking ring 23.

For reasons of economy of the manufacturing process it may be desirable to avoid the need of a threaded or nicked portion of the piston rod. The stroke restricting means then preferably comprise one or more annular clips which are removably and slidably clamped around the portion of the piston rod extending outside the cylinder. The annular clips can be simply positioned on top of each other over part of the length of the piston rod. By variating the number of clips the user can adjust the dosage to the amount desired.

Usually means are provided with which the pump can be mounted rigidly or removably on a container or reservoir, or above a sink.

To this purpose, a screw cap 20 is incorporated which is co-operable with a ring-shaped integral collar 21 and has a dimension such that it can be screwed onto the normal orifice of the container. The position of collar 21 can be chosen over the whole length of the cylindrical housing, whereby factors such as stability and depth of insertion into the container play an important role.

A suction tube adapted to the dimensions of the container can be fixed to inlet 3, as a result of which the pump can be used on containers of almost every dimension.

**Claims**

1. A dispensing and dosing pump comprising a cylinder (1) with a top (4) and a bottom wall (2) having an inlet (3) in or near the bottom wall and an outlet (5) in or near the top wall, and a piston (6) which is up- and downwardly movable within the cylinder by means of a piston rod extending through the top wall of the cylinder, the dispensing action of the pump taking place on the upstroke of the piston, characterized in that a first membrane (10) is fitted to the piston which, on the upstroke of the piston, is pressed into sliding and sealing contact with the inside wall of the cylinder while on the down-stroke allowing open passage, and a second stationary membrane (11) is fitted to or near the top wall of the cylinder, which, on the down-stroke of the piston, is pressed into sliding and sealing contact with the piston rod (7) while, on the up-stroke allowing open passage.

2. A pump according to claim 1, characterized in that a pressure spring (9) is incorporated between the piston and the bottom wall of the cylinder.

3. A pump according to claim 1 or 2, characterized in that means are incorporated for restricting the full stroke of the piston.

4. A pump according to claim 3, characterized in that the stroke-restricting means comprise a sleeve (14) enclosing the piston rod (7) and extending through the top wall (4) of the cylinder (1), the sleeve (14) being slidable with respect to the piston rod as well as with respect to the cylinder, and means for securing the sleeve with respect to the cylinder.

5. A pump according to claim 4, characterized in that the means for securing the sleeve comprise a clamping bush (15) and screw cap (16).

6. A pump according to any one of claims 3 to 5, characterized in that the stroke-restricting means comprise a blocking nut (18) which is adjustable over a screw threaded portion of the piston rod.

7. A pump according to any one of claims 3 to 5, characterized in that the stroke-restricting means comprise a blocking ring (23) which is adjustable over a nicked portion of the piston rod.

8. A pump according to any one of the preceding claims, characterized in that an integral collar (21) and a screw cap (20) co-operable therewith are provided for removably mounting the pump on a container orifice.

**Patentansprüche**

1. Abgabe- und Dosierpumpe, die einen Zylinder (1) mit einer Decken- (4) und einer Bodenwandung (2) enthält, welcher eine Eintrittsöffnung (3) in oder in der Nähe der Bodenwandung und eine Austrittsöffnung (5) in oder in der Nähe der Deckenwandung und einen Kolben (6) besitzt, der innerhalb des Zylinders mit Hilfe einer Kolbenstange, die sich durch die Deckenwandung des Zylinders hindurch erstreckt, auf- und abbewegt werden kann, wobei der Abgabevorgang der Pumpe während des aufwärtigen Hubs des Kolbens erfolgt, dadurch gekennzeichnet, daß eine erste Membran (10) am Kolben eingepaßt ist, die während des Aufwärtshubs des Kolbens in gleitenden und verschließenden Kontakt mit der Wandinnenseite des Zylinder gepreßt wird, während sie beim Kolbenniedergang freien Durchtritt gewährt, und eine zweite, stationäre Membran (11) an oder nahe der Deckenwandung des Zylinders eingepaßt ist, die während des Kolbenniedergangs in gleitenden und verschließenden Kontakt mit der Kolbenstange (7) gepreßt wird, während sie beim Aufwärtshub freien Durchtritt gewährt.

2. Pumpe nach Anspruch 1, dadurch gekennzeichnet, daß eine Druckfeder (9) zwischen dem Kolben und der Bodenwandung des Zylinders eingebaut ist.

3. Pumpe nach Anspruch 1 oder 2, dadurch gekennzeichnet, daß Mittel zur Einschränkung des vollständigen Kolbenhubs eingebaut sind.

4. Pumpe nach Anspruch 3, dadurch gekennzeichnet, daß die den Hub einschränkenden Mittel eine Hülse bzw. Gleitmuffe (14), die die Kolbenstange (7) umgreift und sich durch die Deckenwandung (4) des Zylinders (1) erstreckt, wobei die Hülse bzw. Gleitmuffe (14) sowohl in Bezug auf die Kolbenstange als auch in Bezug auf den Zylinder verschiebbar ist, und Mittel zur Befestigung der Hülse bzw. Gleitmuffe an dem Zylinder umfassen.

5. Pumpe nach Anspruch 4, dadurch gekennzeichnet, daß die Mittel zur Befestigung der Hülse bzw. Gleifmuffe eine Klemmbuchse (15) und eine Überwurfmutter (16) umfassen.

6. Pumpe nach einem beliebigen der Ansprüche 3 bis 5, dadurch gekennzeichnet, daß die den Hub einschränkenden Mittel eine Sperrmutter (18) umfassen, welche über eine mit Schraubengewinde versehenen Teil der Kolbenstange hinweg justierbar ist.

7. Pumpe nach einem beliebigen der Ansprüche 3 bis 5, dadurch gekennzeichnet, daß die den Hub einschränkenden Mittel einen Blockierungsring (23) umfassen, welcher über einen mit Einkerbungen versehenen Teil der Kolbenstange hinweg justierbar ist.

8. Pumpe nach einem beliebigen der voranstehenden Ansprüche, dadurch gekennzeichnet, daß eine integrierte Manschette (21) und eine mit ihr zusammenwirkende Überwurfmutter (20) vorgesehen sind, um die Pumpe abnehmbar an einer Behälteröffnung anzubringen.

**Revendications**

1. Pompe distributrice et doseuse comportant un cylindre (1) avec une paroi supérieure (4) et une paroi inférieure (2) présentant une entrée (3) dans la paroi inférieure ou près de la paroi inférieure et une sortie (5) dans la paroi supérieure ou près de la paroi supérieure, ainsi qu'un piston (6) qui peut être animé d'un mouvement vers le haut et vers le bas dans le cylindre au moyen d'une tige de piston qui s'étend à travers la paroi supérieure du cylindre, l'action distributrice de la pompe s'effectuant lors de la course du piston vers le haut, caractérisée en ce que sur le piston est montée une première membrane (10) qui, lors de la course du piston vers le haut, est pressée pour venir en contact coulissant et étanche avec la paroi intérieure du cylindre, tout en permettant un passage ouvert lors de la course vers le bas; et en ce que, sur la paroi supérieure du cylindre ou près de cette paroi, est montée une seconde membrane fixe (11) qui, lors de la course du piston vers le bas, est pressée pour venir en contact coulissant et étanche avec la tige de piston (7) tout en permettant un passage ouvert lors de la course vers le haut.

2. Pompe selon la revendication 1, caractérisée en ce qu'un ressort de pression (9) est incorporé entre le piston et la paroi inférieure du cylindre.

3. Pompe selon la revendication 1 ou 2, caractérisée en ce que des moyens sont incorporés pour limiter la course totale du piston.

4. Pompe selon la revendication 3, caractérisée en ce que les moyens de limitation de la course comportent un fourreau (14) dans lequel est enfermée la tige de piston (7) et qui s'étend à travers la paroi supérieure (4) du cylindre (1), le fourreau (14) pouvant coulisser par rapport à la tige de piston ainsi que par rapport au cylindre, ainsi que des moyens pour fixer le fourreau par rapport au cylindre.

5. Pompe selon la revendication 4, caractérisée en ce que les moyens de fixation du fourreau comportent une douille de bridage (15) et un écrou à chapeau (16).

6. Pompe selon l'une quelconque des revendications 3 à 5, caractérisée en ce que les moyens de limitation de la course comportent un écrou de blocage (18) qui peut se régler sur une portion filetée de la tige de piston.

7. Pompe selon l'une quelconque des revendications 3 à 5, caractérisée en ce que les moyens de limitation de la course comportent une baque de blocage (23) qui peut se régler sur une portion crantée de la tige de piston.

8. Pompe selon l'une quelconque des revendications précédentes, caractérisée en ce qu'un collier d'un seul tenant (21) et un écrou à chapeau (20) qui collabore avec lui sont prévus pour monter, de façon amovible, la pompe sur l'orifice d'un récipient.

*Fig.1.*

Fig.2.

# Fig.3.